# EUROPEAN PATENT SPECIFICATION

(11) **EP 3 647 074 B1**
(45) Date of publication and mention of the grant of the patent: **29.06.2022**
(21) Application number: 17915779.7
(22) Date of filing: 15.11.2017
(51) Int. Cl.: F16C 33/78, F16C 33/80, F16J 15/16, F16J 15/3244, F16J 15/3264, F16J 15/447, B60B 27/00

(54) **WHEEL BEARING SEALING DEVICE**
RADLAGERDICHTUNGSVORRICHTUNG
DISPOSITIF D'ÉTANCHÉITÉ DE PALIER DE ROUE

(30) Priority: 30.06.2017 KR 20170083455
(43) Date of publication of application: 06.05.2020
(73) Proprietor: Iljin Global Co., Ltd., Seoul 06157 (KR)
(72) Inventor: KIM, Yong Won, Seoul 06157 (KR); CHA, Chae Yeong, Seoul 06157 (KR)
(74) Representative: BRP Renaud & Partner mbB Rechtsanwälte Patentanwälte Steuerberater
(86) International application number: PCT/KR2017/012948
(87) International publication number: WO 2019/004525

(56) References cited:
- JP-U- H03 105 767
- KR-A- 20120 067 935
- KR-A- 20150 004 794
- KR-A- 20160 067 836
- KR-B1- 101 366 145
- US-A1- 2016 236 509
- US-B2- 8 474 825

## Description

### [Technical Field]

Embodiments of the present disclosure relate to a sealing device used in a wheel bearing.

### [Background Art]

A chassis of a vehicle comprises a wheel bearing coupled with a wheel of the vehicle. The wheel bearing comprise an outer ring coupled to a portion of the chassis, a wheel hub coupled with a drive axle or a driven axle, and a plurality of rolling elements arranged between the outer ring and the wheel hub. Owing to the use environment of the wheel bearing, foreign materials such as rainwater, sewage, and the like may infiltrate into an interior of the wheel bearing through a gap formed between the outer ring and the wheel hub. Since such foreign materials degrade operability and durability of the wheel bearing, a sealing device for sealing the gap between the outer ring and the wheel hub is provided in the wheel bearing.

A sealing device for a wheel bearing is fitted into the gap between the outer ring and the wheel hub. A conventional sealing device for a wheel bearing comprises an insert body for an outer ring, which is formed in an annular shape, an insert body for a wheel hub, which is formed in an annular shape, and a sealing part coupled to the insert body for an outer ring. The insert body for an outer ring is fitted to the outer ring of the wheel bearing. The insert body for a wheel hub is fitted to the wheel hub of the wheel bearing and rotated relative to the outer ring.

JP H03 105767 U discloses the features of the preamble of claim 1.

### [Disclosure]

### [Technical Problem]

According to the conventional sealing device for a wheel bearing, the sealing part coupled to the insert body for an outer ring comprises an annular rubber lip for sealing action. The lip protrudes toward the insert body for a wheel hub and comes into contact with a surface of the insert body for a wheel hub. Since the insert body for a wheel hub is rotated relative to the insert body for an outer ring, the lip rubs along the surface of the insert body for a wheel hub in a state of coming into contact with the surface of the insert body for a wheel hub.

Since the contact and the rubbing between the lip and the insert body for a wheel hub act as resistance with respect to a relative rotation between the outer ring and the wheel hub, the conventional sealing device for a wheel bearing increases a torque for rotating the wheel hub relative to the outer ring. Further, since the rubbing between the lip and the insert body for a wheel hub abrades the lip, the conventional sealing device for a wheel bearing causes degradation in sealing performance due to the abrasion of the lip. Further, since the conventional sealing device for a wheel bearing has only a structure in which the lip blocks a gap between the insert bodies, the conventional sealing device for a wheel bearing cannot minimize infiltration amount of foreign materials or delay infiltration of foreign materials, and thus the conventional sealing device for a wheel bearing merely provides limited sealing performance.

Embodiments disclosed herein solve the above-described problems of the prior art. Embodiments disclosed herein provide a sealing device for a wheel bearing, which is configured to reduce a torque required for a relative rotation of relative rotating elements. Further, embodiments disclosed herein provide a sealing device for a wheel bearing, which is configured to gradationally block foreign materials and minimize infiltration amount of foreign materials. Further, embodiments disclosed herein provide a sealing device for a wheel bearing, which is configured to reduce infiltration rates of foreign materials.

### [Technical Solution]

Embodiments of the present disclosure relate to a sealing device for a wheel bearing. The sealing device for a wheel bearing according to one embodiment may be inserted into a wheel bearing and may comprise a first insert body and a second insert body. The first insert body may comprise an annular first frame and a first sealing part coupled to the first frame.

The second insert body may comprise an annular second frame having a diameter that is smaller than that of the first frame and a second sealing part coupled to the second frame. The second insert body may be rotated relative to the first insert body about the rotation axis. The first insert body and the second insert body may be arranged such that a gap is formed between the first sealing part and the second sealing part. At least one of the first sealing part and the second sealing part may comprise a lip having an annular shape based on the rotation axis. The lip may comprise at least one groove on a radially outer surface thereof.

In one embodiment, the lip may comprise a flat surface on a radially inner surface thereof.

In one embodiment, the lip may comprise a plurality of grooves and adjacent grooves among a plurality of grooves may be spaced apart from each other along the rotation axis.

In one embodiment, a width of the groove may exceed 0.1 mm.

In one embodiment, the groove may extend in a circumferential direction of the rotation axis.

In one embodiment, the first sealing part and the second sealing part may be formed to define a first cavity having an annular shape based on the rotation axis, a first cavity passage connected to the first cavity and having an annular shape based on the rotation axis, and a second cavity connected to the first cavity passage and having an annular shape based on the rotation axis in the gap.

In one embodiment, the first sealing part may comprise a first lip protruding toward the second sealing part, having an annular shape based on the rotation axis and configured to partially define the first cavity. The first lip may comprise the at least one groove on a radially outer surface thereof facing the first cavity.

In one embodiment, the second sealing part may comprise a first baffle having an annular shape based on the rotation axis, and the first lip may comprise a second baffle spaced apart from the first baffle in the radially inward direction and having an annular shape based on the rotation axis. The first baffle and the second baffle may partially define the first cavity passage.

In one embodiment, the first lip may comprise a flat surface on a radially inner surface thereof.

In one embodiment, the second sealing part may comprise a second lip protruding toward the first sealing part, having an annular shape based on the rotation axis and configured to partially define a second cavity.

In one embodiment, the second lip may comprise the at least one groove on a radially outer surface thereof facing the second cavity.

In one embodiment, the second lip may comprise a third baffle having an annular shape based on the rotation axis.

In one embodiment, the first sealing part and the second sealing part may be formed to define a second cavity passage connected to the second cavity and having an annular shape based on the rotation axis and a third cavity connected to the second cavity passage and having an annular shape based on the rotation axis in the gap. The first sealing part may comprise a fourth baffle and a fifth baffle, which are spaced apart from each other along the rotation axis and have an annular shape based on the rotation axis. The second sealing part may comprise a sixth baffle located between the fourth baffle and the fifth baffle and having an annular shape based on the rotation axis. The fourth baffle, the fifth baffle and the sixth baffle may partially define the third cavity.

In one embodiment, the first cavity passage may be located in the radially outward direction than the second cavity passage between both ends of the second cavity passage.

In one embodiment, the first sealing part may comprise a grease lip coming into contact with an outer circumferential surface of the second frame and having an annular shape based on the rotation axis. The grease lip may partially define a fourth cavity connected to the third cavity and having an annular shape based on the rotation axis.

In one embodiment, the second sealing part may comprise a base portion coupled to the second frame, and the base portion may comprise the at least one groove on a radially outer surface thereof.

In one embodiment, the first insert body may be coupled to an outer circumferential surface or an inner circumferential surface of the outer ring of the wheel bearing.

### [Advantageous Effects]

The sealing device for a wheel bearing according to one embodiment is configured such that the first sealing part is not in contact with the second sealing part so that it is possible to reduce a torque required for relative rotation between elements which are respectively rotated in a wheel bearing. Further, in accordance with the sealing device for a wheel bearing according to one embodiment, the first sealing part and the second sealing part can define an improved labyrinth-shaped gap for preventing infiltration of foreign materials therebetween, thereby gradationally preventing infiltration of foreign materials and minimizing infiltration amount of foreign materials. Further, the sealing device for a wheel bearing according to one embodiment can reduce infiltration rates of foreign materials by the groove disposed in the first sealing part or the second sealing part. Therefore, the sealing device for a wheel bearing according to one embodiment can have improved sealing performance.

### [Description of Drawings]

FIG. 1 is a cross-sectional view illustrating the sealing device for a wheel bearing according to one embodiment, which is coupled to an example of a wheel bearing.
FIG. 2 is a side view illustrating a cross section of the sealing device for a wheel bearing according to one embodiment taken along a rotation axis.
FIG. 3 illustrates a cross-sectional structure of the sealing device for a wheel bearing according to one embodiment taken along the rotation axis.
FIG. 4 is a cross-sectional view illustrating grooves in the sealing device of a wheel bearing according to one embodiment.
FIG. 5 is a schematic diagram illustrating a cross-sectional structure of a labyrinth-shaped gap defined between a first sealing part and a second sealing part according to one embodiment.
FIG. 6 is a cross-sectional view illustrating the sealing device for a wheel bearing according to one embodiment coupled to another example of a wheel bearing.

### [Modes of the Invention]

Embodiments of the present disclosure are exemplified for the purpose of describing the technical spirit of the present disclosure. The scope of the claims according to the present disclosure is not limited to the embodiments described below or to the detailed descriptions of these embodiments.

Unless otherwise defined, all technical and scientific terms used herein have the same meaning commonly understood by those skilled in the art to which the present disclosure pertains. All terms used herein are selected for the purpose of more clearly describing the present disclosure and not limiting the scope of the present disclosure defined by appended claims.

Unless the phrase or sentence clearly indicates otherwise, terms "comprising," "including," "having," "taking," and the like used herein should be construed as open-ended terms encompassing the possibility of including other embodiments.

The singular form described herein may include the plural form unless the context clearly dictates otherwise, and this is equally applied to the singular form set forth in the claims.

Terms a "first," a "second," and the like are used to distinguish a plurality of components, and the order or importance of corresponding components is not limited by these terms.

Throughout the present disclosure, when a component is referred to as being "connected" or "coupled" to another component, the component can be directly connected or coupled to another component, or can be connected or coupled to another component by intervening yet another component therebetween.

A directional directive of a "radially outward direction" used herein means a direction away from an axis among radial directions with respect to the axis of a rotating body, and a directional directive of a "radially inward direction" means a direction opposite the radially outward direction. Further, a directional directive of an "axially inward direction" used herein means a direction from a wheel toward an interior of a chassis along the axis of the rotating body, and a directional directive of an "axially outward direction" means a direction opposite the axially inward direction. A sealing device for a wheel bearing shown in the accompanying drawings may be located in an orientation different from an orientation illustrated in the accompanying drawings, and the directional directives may be interpreted accordingly.

Hereinafter, embodiments will be described with reference to the accompanying drawings. In the accompanying drawings, the same reference numerals are assigned to the same or corresponding components. Further, in the following description of the embodiments, a duplicate description on the same or corresponding components may be omitted. However, even though a description on a component is omitted, such a component is not intended to be excluded in any embodiment.

The embodiments described below and the examples shown in the accompanying drawings relate to a sealing device for a wheel bearing (hereinafter simply referred to as a sealing device). The sealing device according to the embodiments may be used for sealing a wheel bearing for a driving wheel or for sealing a wheel bearing for a driven wheel.

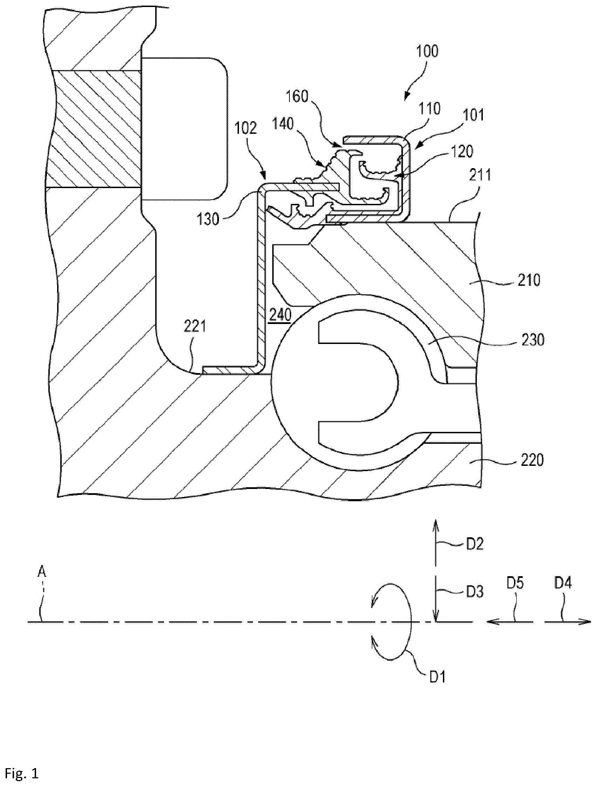

With reference to FIG. 1, an example of a sealing device according to one embodiment and a wheel bearing to which the sealing device may be applied is illustrated.

A sealing device 100 comprises a first insert body 101 and a second insert body 102 which have an annular shape based on a rotation axis A. The first insert body 101 comprises a first frame 110 having an annular shape based on the rotation axis A and a first sealing part 120 coupled to the first frame 110 in a circumferential direction D1 of the rotation axis A. The second insert body 102 comprises a second frame 130 having an annular shape based on the rotation axis A and a second sealing part 140 coupled to the second frame 130 in the circumferential direction D1 of the rotation axis A. The second frame 130 of the second insert body 102 has a diameter that is smaller than that of the first frame 110.

According to one embodiment, the second insert body 102 may rotate relative to the first insert body 101 about the rotation axis A. Further, the first insert body 101 and the second insert body 102 are arranged such that centers of the annular shapes thereof are located on the same rotation axis A. According to the example shown in FIG. 1, the first insert body 101 is arranged to be spaced apart from the second insert body 102 in a radially outward direction D2 and an axially inward direction D4. Accordingly, the first insert body 101 and the second insert body 102 form a gap 160 therebetween. In particular, the first insert body 101 and the second insert body 102 form a gap 160, which extends between the first sealing part 120 and the second sealing part 140 in the form of an annular shape based on the rotation axis A, between the first sealing part 120 and the second sealing part 140. The sealing device 100 blocks foreign materials such as rainwater, sewage, and the like, which are introduced into the gap 160, due to complementary shapes formed in each of the first sealing part 120 and the second sealing part 140.

The sealing device 100 of one embodiment may be used in a wheel bearing for a vehicle. The wheel bearing may comprise two members arranged on the same rotation axis and having a generally cylindrical shape, and a plurality of rolling elements arranged between the two members in the circumferential direction. One of the two cylindrical members may be rotated relative to the other member about the rotation axis. Alternatively, the two cylindrical members may be rotated relative to each other about the rotation axis. With reference to the example shown in FIG. 1, the wheel bearing may comprise a cylindrical outer ring 210, a wheel hub 220 which is at least partially located in the outer ring 210, and a plurality of rolling elements 230 arranged between an inner circumferential surface of the outer ring 210 and an outer circumferential surface of the wheel hub 220 in the circumferential direction D1 and configured to rotate or roll. The outer ring 210 may be fixed to a portion of a chassis of the vehicle. The wheel hub 220 may be coupled to a driving axle or a driven axle of the chassis to be rotated relative to the outer ring 210 about the rotation axis A. Further, the wheel hub 220 may be coupled with a drive wheel or a driven wheel of the vehicle in an axially outward direction D5. In the example shown in FIG. 1, the rolling elements 230 are metal balls, but the rolling elements 230 are not limited to the metal ball.

According to the example shown in FIG. 1, the wheel bearing has an annular gap 240, in which the rolling elements 230 are arranged, between the inner circumferential surface of the outer ring 210 and an outer circumferential surface 221 of the wheel hub 220. The sealing device 100 according to one embodiment may be mounted at an outboard side of the wheel bearing to seal the gap 240. For example, an inner circumferential surface of the first insert body 101 (e.g., an inner circumferential surface of the first frame 110) is interference fitted on an outer circumferential surface 211 of the outer ring 210 so that the first insert body 101 is coupled to the outer circumferential surface 211 of outer ring 210. An inner circumferential surface of the second insert body 102 (e.g., an inner circumferential surface of the second frame 130) is interference fitted on the outer circumferential surface 221 of the wheel hub 220 so that the second insert body 102 is coupled to the outer circumferential surface 221 of the wheel hub 220. Accordingly, the second insert body 102 may be rotated relative to the first insert body 101 about the rotation axis A together with the wheel hub 220. Alternatively, the first insert body 101 may be coupled to the inner circumferential surface of the outer ring 210 by interference fit using the outer circumferential surface of the first frame 110.

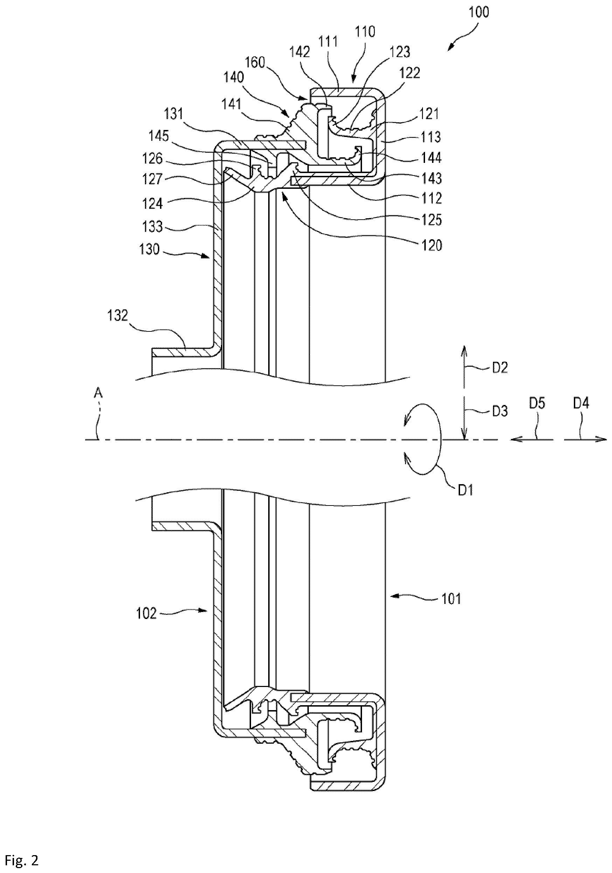

The sealing device 100 according to one embodiment will be described in detail with reference to FIGS. 2 to 4.

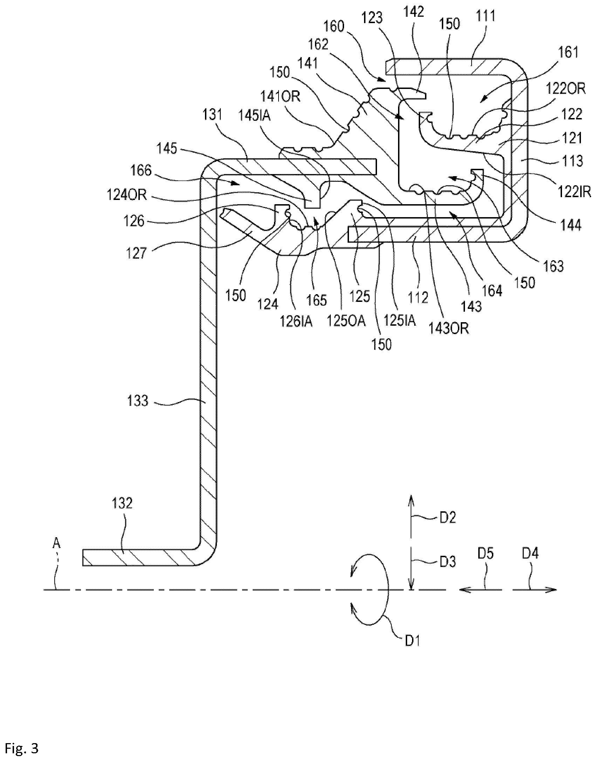

The first frame 110 has an annular shape, and a center of the annular shape is located on the rotation axis A. The second frame 130 has an annular shape, and a center of the annular shape is located on the rotation axis A. As shown in FIGS. 2 and 3, the first frame 110 has an approximately U-shaped longitudinal cross-sectional shape (a cross-sectional shape taken along the rotation axis A), and the second frame 130 has an approximately N-shaped longitudinal cross-sectional shape. The first frame 110 and the second frame 130 may be made of a metal material or a plastic material.

The first frame 110 comprise a pair of cylindrical portions 111 and 112 and a disc portion 113 extending between the cylindrical portions 111 and 112. The cylindrical portions 111 and 112 have an annular shape based on the rotation axis A. The disc portion 113 is bent relative to each of the cylindrical portions 111 and 112. The cylindrical portion 112 is fitted on the outer circumferential surface 211 of the outer ring 210 (*see* FIG. 1) by an inner circumferential surface facing a radially inward direction D3 and extending in the circumferential direction D1.

The second frame 130 comprises a pair of cylindrical portions 131 and 132 and a disc portion 133 extending between the cylindrical portions 131 and 132. The cylindrical portions 131 and 132 have an annular shape based on the rotation axis A. The cylindrical portion 131 is bent from the disc portion 133 in the axially inward direction D4, and the cylindrical portion 132 is bent from the disc portion 133 in the axially outward direction D5. The cylindrical portion 131, which is located in the radially outward direction D2 among a pair of cylindrical portions 131 and 132, is located between a pair of cylindrical portions 111 and 112 of the first frame 110. The cylindrical portion 132 is fitted on the outer circumferential surface 221 of the wheel hub 220 (*see* FIG. 1) by the inner circumferential surface facing the radially inward direction D3 and extending in the circumferential direction D1.

The first sealing part 120 is integrally coupled to the first frame 110 along the first frame 110 in the circumferential direction D1. The second sealing part 140 is integrally coupled to the second frame 130 along the second frame 130 in the circumferential direction D1. In the example shown in FIGS. 2 and 3, the first sealing part 120 comprises a base portion 121 which is coupled to the first frame 110 and has an approximately L-shaped longitudinal cross section. The first sealing part 120 is coupled to the first frame 110 along a portion of the disc portion 113 and an entirety of the cylindrical portion 112 on the base portion 121. In the example shown in FIGS. 2 and 3, the second sealing part 140 comprises a base portion 141 which is coupled to the second frame 130 and has an approximately triangular-shaped longitudinal cross section. The second sealing part 140 is coupled to the second frame 130 along an entirety of the cylindrical portion 131 on the base portion 141. The first sealing part 120 and the second sealing part 140 may be made of a rubber material or a plastic material. For example, the first sealing part 120 and the first frame 110, and the second sealing part 140 and the second frame 130 may be respectively coupled by adhesion. Alternatively, a material forming the first sealing part 120 may be molded together with the first frame 110 such that the first insert body 101 is manufactured, and a material forming the second sealing part 140 may be molded together with the second frame 130 such that the second insert body 102 is manufactured.

In the sealing device of the embodiments, the first insert body 101 and the second insert body 102 are arranged such that the gap 160 is formed between the first sealing part 120 and the second sealing part 140. That is, owing to the gap 160, the first sealing part 120 and the second sealing part 140 are positioned in a non-contact state. Thus, when the second insert body 102 is rotated together with a rotation of the wheel hub 220 of the wheel bearing (*see* FIG. 1), the first sealing part 120 does not come into contact with the second sealing part 140. Accordingly, the sealing device 100 reduces a torque required for relative rotations of two relative-rotating components of the wheel bearing (e.g., the outer ring 210 and the wheel hub 220 shown in FIG. 1).

Further, the sealing device 100 of the embodiments gradationally blocks foreign materials infiltrating into the gap 240 (*see* FIG. 1) between the outer ring and the wheel hub and minimizes infiltration amount of foreign materials such that the gap 240 is sealed with high reliability. In the sealing device 100 of one embodiment, in order to minimize infiltration of foreign materials, the gap 160 between the first insert body 101 and the second insert body 102 has a labyrinth shape for preventing infiltration of foreign materials. Further, the sealing device 100 of one embodiment comprises one or more annular cavities in the labyrinth-shaped gap 160 to gradationally block foreign materials by the cavities. According to one embodiment, the first sealing part 120 and the second sealing part 140 are formed to define the labyrinth-shaped gap 160 and the cavities between the first insert body 101 and the second insert body 102.

Further, the sealing device 100 of the embodiments comprises at least one groove 150 for reducing infiltration rates of foreign materials. Any one or both of the first sealing part 120 and the second sealing part 140 may comprise the groove 150. The groove 150 may be formed on surfaces of the first sealing part 120 and the second sealing part 140, which are in the radially outward direction D2 and face the cavity.

In one embodiment, the first sealing part 120 and the second sealing part 140 are formed to define a first cavity 161 having an annular shape based on the rotation axis A and a second cavity 163 spaced apart from the first cavity 161 and having an annular shape based on the rotation axis A in the gap 160 between the first sealing part 120 and the second sealing part 140. Further, the first sealing part 120 and the second sealing part 140 are formed to define a first cavity passage 162 connected to the first cavity 161 and the second cavity 163 and having an annular shape based on the rotation axis A in the gap 160.

In one embodiment, the first sealing part 120 comprises a first lip 122 protruding toward the second sealing part 140 in the axially outward direction D5 and having an annular shape based on the rotation axis A. The first lip 122 may be curved or bent so as to partially define the first cavity 161. The second sealing part 140 comprises a first baffle 142 which partially defines the first cavity 161 together with the first lip 122.

In the example shown in FIGS. 2 and 3, the first lip 122 is spaced apart from an inner circumferential surface of the cylindrical portion 111 and the second sealing part 140. The first baffle 142 protrudes along an edge of the base portion 141 in the radially outward direction D2 toward the inward direction D4 and has an annular shape based on the rotation axis A. The first lip 122 comprises a second baffle 123 extending along a free end thereof and having an annular shape based on the rotation axis A. The second baffle 123 may protrude from the free end of the first lip 122 to be inclined or perpendicular with respect to the rotation axis A. Further, the second baffle 123 may be curved with respect to the rotation axis A. In the example shown in FIGS. 2 and 3, the second baffle 123 vertically protrudes with respect to the rotation axis A in the radially outward direction D2. The second baffle 123 is located to be spaced apart from the first baffle 142 in the radially inward direction D3. Alternatively, the free end of the second baffle 123 may be spaced apart from the first baffle 142 in the axially inward direction D4 or in the axially outward direction D5.

According to the example shown in FIGS. 2 and 3, the first baffle 142, the first lip 122, and the second baffle 123 partially define the first cavity 161. Further, the first baffle 142 and the second baffle 123 partially define the first cavity passage 162. The first cavity 161 is defined by the inner circumferential surface of the cylindrical portion 111, a surface of the first sealing part 120 in the axially outward direction D5, a surface 122OR of the first lip 122 in the radially outward direction D2, the first baffle 142, and a surface of the second baffle 123 in the axially inward direction D4.

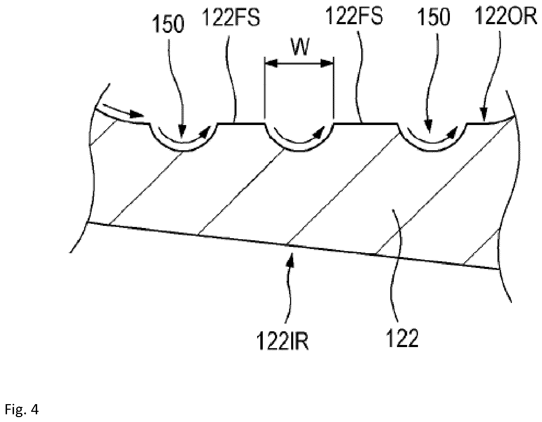

In one embodiment, the first lip 122 comprises at least one or a plurality of grooves 150 on the radially outer surface 122OR facing the first cavity 161. The first lip 122 does not comprise a groove 150 on a surface (i.e., a radially inner surface 122IR) opposite to the radially outer surface 122OR on which the grooves 150 are arranged. According to the example shown in FIG. 4, the first lip 122 comprises a flat surface having no irregular shape on the radially inner surface 122IR.

In one embodiment, the second sealing part 140 comprises a second lip 143 protruding toward the first sealing part 120 and having an annular shape based on the rotation axis A. The second lip 143 partially defines the second cavity 163. The second lip 143 comprises at least one or a plurality of grooves 150 on a radially outer surface 143OR facing the second cavity 163. In the example shown in FIGS. 2 and 3, the second cavity 163 is separated from the first cavity 161 by the first lip 122 and is located in the radially inward direction D3 with respect to the first cavity 161. The second lip 143 is spaced apart from the first lip 122 in the radially inward direction D3. The second lip 143 may be curved or bent to partially define the second cavity 163. The second lip 143 comprises a third baffle 144 extending along a free end thereof and having an annular shape based on the rotation axis A. The third baffle 144 may protrude from the free end of the second lip 143 to be inclined or perpendicular with respect to the rotation axis A. Further, the third baffle 144 may be curved with respect to the rotation axis A. In the example shown in FIGS. 2 and 3, the third baffle 144 vertically protrudes with respect to the rotation axis A in the radially outward direction D2.

In one embodiment, the first sealing part 120 and the second sealing part 140 are formed to define a third cavity 165, which communicates with the second cavity 163 and has an annular shape based on the rotation axis A, in the gap 160. Further, the first sealing part 120 and the second sealing part 140 are formed to define a second cavity passage 164, which is connected to the second cavity 163 and the third cavity 165 and has an annular shape based on the rotation axis A, in the gap 160. The first sealing part 120 comprises a fourth baffle 125 and a fifth baffle 126 which are spaced apart from each other along the rotation axis A, and the second sealing part 140 comprises a sixth baffle 145 located between the fourth baffle 125 and the fifth baffle 126. The fourth baffle 125, the fifth baffle 126 and the sixth baffle 145 have an annular shape based on the rotation axis A and partially define the third cavity 165. The second cavity passage 164 is defined in the gap 160 by the second lip 143 and the first sealing part 120.

In the example shown in FIGS. 2 and 3, the first sealing part 120 comprises an extension portion 124 protruding from the cylindrical portion 112 in the axially outward direction D5 and having an annular shape based on the rotation axis A. The fourth baffle 125 and fifth baffle 126 protrude from the extension portion 124 in the radially outward direction D2. The sixth baffle 145 is located between the fourth baffle 125 and the fifth baffle 126. The sixth baffle 145 protrudes toward the first sealing part 120 in the radially inward direction D3.

Further, in the example shown in FIGS. 2 and 3, the extension portion 124 of the first sealing part 120 comprises grooves 150 on a radially outer surface 124OR that is between the fourth baffle 125 and the fifth baffle 126. The fourth baffle 125 comprises grooves 150 on an axially inner surface 125IA, and the fifth baffle 126 comprises grooves 150 on an axially inner surface 126IA. Further, the axially inner surface 125IA of the fourth baffle 125 is perpendicular to the rotation axis A, and an axially outer surface 125OA of the fourth baffle 125 is inclined with respect to the rotation axis A. An axially inner surface 145IA of the sixth baffle 145 is perpendicular to the rotation axis A.

In the example shown in FIGS. 2 and 3, the first cavity passage 162 and the second cavity passage 164 have an annular shape based on the rotation axis A. The first cavity passage 162 and the second cavity passage 164 are curved with respect to the rotation axis A to have an approximately L-shaped longitudinal cross section. The first cavity passage 162 is located in the radially outward direction D2 than the second cavity passage 164. Further, the first cavity passage 162 is located between both ends of the second cavity passage 164. The first cavity passage 162 is defined by a surface of the first baffle 142 in the axially inward direction D4, a surface of the second baffle 123 in the axially outward direction D5, and a surface of the base portion 141 of the second sealing part 140 in the axially inward direction D4. The first cavity 161 communicates with the second cavity 163 by the first cavity passage 162. The second cavity passage 164 is defined by a portion of the surface 122IR of the first lip 122 in the radially inward direction D3, a surface of the second lip 143 in the radially inward direction D3, a surface of the third baffle 144 in the axially inward direction D4, and a surface of the base portion 121 of the first sealing part 120. The second cavity 163 communicates with the third cavity 165 by the second cavity passage 164.

In one embodiment, the sealing device 100 comprises a fourth cavity 166, which is connected to the third cavity 165 and has an annular shape based on the rotation axis A, between the first sealing part 120 and the second frame 130. The first sealing part 120 may be formed to define the fourth cavity 166 between the first sealing part 120 and the second frame 130. The fourth cavity 166 is spaced apart from the third cavity 165 in the axially outward direction D5. According to the example shown in FIGS. 2 and 3, the first sealing part 120 comprises a grease lip 127 protruding toward the second frame 130 to be inclined with respect to the rotation axis A and having an annular shape based on the rotation axis A. For example, grease lip 127 may prevent leakage of grease which fills in the gap 240 (*see* FIG. 1) between the outer ring 210 and the wheel hub 220 and lubricates the rolling elements 230 (*see* FIG. 1). The grease lip 127 may come into contact with an outer circumferential surface of the second frame 130 of the second insert body 102 at its free end. The fourth cavity 166 is defined by a portion of a surface of the cylindrical portion 131 in the radially inward direction D3, a portion of a surface of the disc portion 133 in the axially inward direction D4, the grease lip 127 and the fifth baffle 126. That is, the grease lip 127 partially defines the fourth cavity 166.

Further, according to the example shown in FIGS. 2 and 3, the base portion 141 comprises a plurality of grooves 150 on a radially outer surface 1410R, which is not surrounded by the first frame 110.

FIG. 4 illustrates the groove 150 formed on the radially outer surface 122OR of the first lip 122 and the radially inner surface 122IR. With reference to the example shown in FIGS. 2 to 4, the groove 150 extends in the circumferential direction D1 of the rotation axis A to form an annular shape. Adjacent grooves 150 are spaced apart along the rotation axis A by a flat surface 122FS. The flat surface 122FS has an annular shape based on the rotation axis A and extends between adjacent grooves 150. Alternatively, the adjacent grooves 150 may be spaced apart by a curved surface. A width W of the groove 150 may exceed 0.1 mm. An upper limit of the width W of the groove 150 may be determined such that the adjacent grooves 150 may be spaced apart from each other by the flat surface 122FS or the curved surface within the length of the lip of the first sealing part 120 (e.g., the first lip 122) or the lip of the second sealing part 140 (e.g., the second lip 143) along the rotation axis A. When the width W of the groove 150 exceeds 0.1 mm, the groove 150 may appropriately hold foreign materials therein. A cross-sectional shape of the groove 150 may have a semicircular shape. However, the cross-sectional shape of the groove 150 is not limited to the semicircular shape and may have a polygonal shape such as a triangular shape, a quadrangular shape and the like. As shown by arrows in FIG. 4, the infiltrating foreign materials may come into contact with the surface of the groove 150. The groove 150 may reduce infiltration rates of foreign materials and hold some amount of foreign materials therein. The foreign materials having the reduced infiltration rates may move to a lower portion of the wheel bearing along the groove 150 due to gravity. The foreign materials moved to the lower portion of the wheel bearing may fall to the radially inner surface 122IR of the first lip 122. Since the radially inner surface 122IR of the first lip 122 does not have a groove 150, the foreign materials may be discharged to the outside of the sealing device 100 in the radially outward direction D2 and the axially outward direction D5 along the radially inner surface 122IR of the first lip 122.

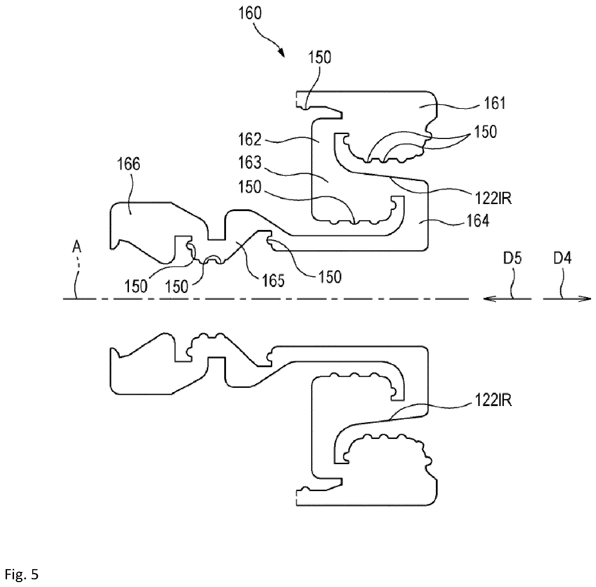

As described above, the first sealing part and the second sealing part define the labyrinth-shaped gap 160 therebetween. FIG. 5 is a schematic diagram illustrating a labyrinth-shaped gap defined by the first sealing part and the second sealing part of the sealing device according to one embodiment. An example of a sealing operation of the sealing device 100 will be described with reference to FIGS. 2 to 5.

The first cavity 161, the first cavity passage 162, the second cavity 163, the second cavity passage 164 and the third cavity 165 form the labyrinth-shaped gap 160. Foreign materials introduced between the first frame 110 and the second sealing part 140 are blocked by the first cavity 161. Since the groove 150 of the first lip 122 located in the first cavity 161 reduces infiltration rates of foreign materials, the foreign materials may be congested in the first cavity 161 and held in the first cavity 161 and also in the groove 150 of the first lip 122. Foreign materials which are not held in the first cavity 161 may infiltrate into the second cavity 163 through the first cavity passage 162.

Since the first cavity passage 162 of the L-shaped longitudinal cross section is oriented opposite to an inflow direction of foreign materials to form a portion of the labyrinth shape, it is difficult for foreign materials to enter the second cavity 163 from the first cavity 161. The groove 150 of the second lip 143 located in the second cavity 163 reduces infiltration rates of foreign materials. Thus, the foreign materials may be congested and held in the second cavity 163. Foreign materials which are not blocked by the second cavity 163 may infiltrate into the third cavity 165 through the second cavity passage 164.

Since the second cavity passage 164 of the L-shaped longitudinal cross section is located with an orientation opposite to the orientation of the first cavity passage 162 to form a portion of the labyrinth shape, it is difficult for foreign materials to enter the third cavity 165 from the second cavity 163. Foreign materials which are not blocked by the second cavity 163 may infiltrate into the third cavity 165 through the second cavity passage 164. However, a flow of foreign materials may completely blocked by the fourth baffle 125 and the sixth baffle 145 which vertically protrude with respect to the rotation axis A, and the foreign materials may be held in the third cavity 165.

As described above, owing to the labyrinth-shaped gap 160 formed by the first sealing part 120 and the second sealing part 140, foreign materials may be blocked by the sealing device 100 and it is difficult for foreign materials to infiltrate into the gap 240 of the wheel bearing *(see* FIG. 1) through the gap 160. Since the foreign materials infiltrating into the gap 160 are held in the first cavity 161, the second cavity 163, or the third cavity 165, the sealing device 100 prevents infiltration of foreign materials with high reliability. Further, the groove 150 located in each cavity reduces infiltration rates of foreign materials such that the foreign materials may be easily held in each cavity. Further, the second baffle 123 and the third baffle 144 which vertically protrude with respect to the rotation axis A may effectively prevent foreign materials from overflowing into a subsequent cavity.

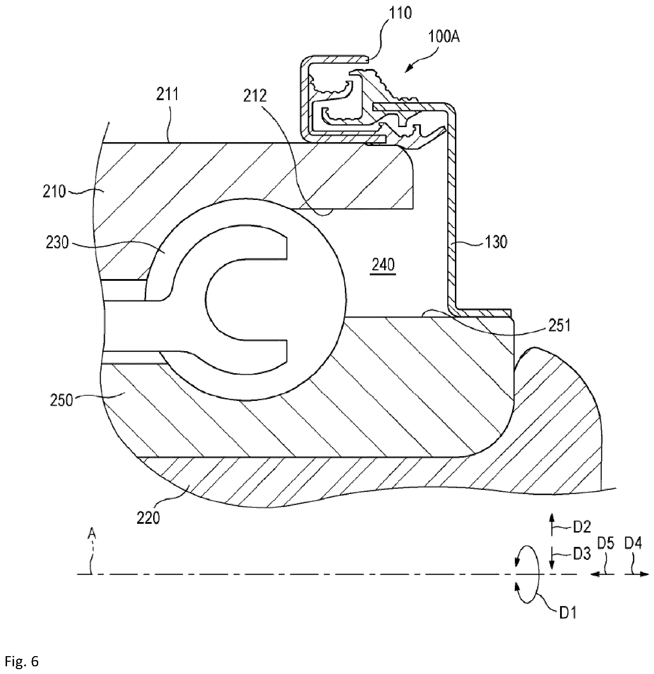

FIG. 6 illustrates a sealing device according to one embodiment coupled to another example of a wheel bearing. A sealing device 100A shown in FIG. 6 is mounted at an inboard side of the wheel bearing. The wheel bearing shown in FIG. 6 comprises an inner ring 250 fitted in the outer circumferential surface of the wheel hub 220 facing the inboard side. The inner ring 250 has a length that is shorter than that of the wheel hub 220. The inner ring 250 is rotated relative to the outer ring 210 together with the wheel hub 220. According to the example shown in FIG. 6, the first frame 110 of the first insert body of the sealing device 100A is interference fitted on the outer circumferential surface 211 of the outer ring 210 by an inner circumferential surface thereof so that the first insert body is coupled to the inner circumferential surface 211 of the outer ring 210. Further, the second frame 130 of the second insert body is interference fitted on an outer circumferential surface 251 of the inner ring 250 so that the second insert body is coupled to the outer circumferential surface 221 of the inner ring 250. Alternatively, the first frame 110 may be coupled to an inner circumferential surface 212 of the outer ring 210 through interference fitting.

The above-described sealing device 100 of one embodiment comprises the first to third cavities 161, 163, and 165, and the adjacent cavities other among first to third cavities 161, 163, and 165 communicate each other. The sealing device of another embodiment may comprise an additional cavity in addition to the above-described cavities. In such an embodiment, in order to define the additional cavity, each of the first sealing part 120 and the second sealing part 140 may comprise an additional lip and an additional baffle.

Alternatively, the first lip 122 of the first sealing part 120 may comprise the above-described groove 150 on the surface 122IR thereof in the radially inward direction.

Alternatively, the groove 150 may extend in a straight-line shape along the rotation axis A or in an oblique diagonal line shape with respect to the rotation axis A, and adjacent grooves 150 may be spaced apart from each other in the circumferential direction D1.

The invention is defined by the appended claims.

## Claims

1. A sealing device (100) for a wheel bearing, comprising:
a first insert body (101) comprising an annular first frame (110) and a first sealing part (120) coupled to the first frame (110); and
a second insert body (102) comprising an annular second frame (130) having a diameter that is smaller than that of the first frame (110) and a second sealing part (140) coupled to the second frame (130), wherein:
the second insert body (102) is configured to be rotated relative to the first insert body (101) about a rotation axis,
the first insert body (101) and the second insert body (102) are arranged such that a gap (160) is formed between the first sealing part (120) and the second sealing part (140),
characterized that
the first sealing part (120) and the second sealing part (140) are formed to define a first cavity (161) having an annular shape based on the rotation axis, a first cavity passage (162) connected to the first cavity (161) and having an annular shape based on the rotation axis, and a second cavity (163) connected to the first cavity passage (162) and having an annular shape based on the rotation axis in the gap (160),
the first sealing part (120) comprises a first lip (122) protruding toward the second sealing part (140), having an annular shape based on the rotation axis and configured to partially define the first cavity (161),
the second sealing part (140) comprises a second lip (143) protruding toward the first sealing part (120), having an annular shape based on the rotation axis and configured to partially define the second cavity (163),
the first lip (122) comprises at least one groove (150) on a radially outer surface thereof facing the first cavity (161),
the second lip (143) comprises at least one groove (150) on a radially outer surface thereof facing the second cavity (163),
the second sealing part (120) comprises a first baffle (142) having an annular shape based on the rotation axis,
the first lip (122) comprises a second baffle (123) spaced apart from the first baffle (142) in the radially inward direction and having an annular shape based on the rotation axis; and
the first baffle (142) and the second baffle (123) partially define the first cavity passage (162),
a width (W) of the groove (150) exceeds 0.1 mm.

2. The sealing device (100) for a wheel bearing according to Claim 1, wherein the first lip (122) and the second lip (143) comprise a flat surface on a radially inner surface thereof.

3. The sealing device (100) for a wheel bearing according to Claim 1, wherein the first lip (122) and the second lip (143) comprises a plurality of grooves (150), and adjacent grooves (150) among a plurality of grooves (150) are spaced apart from each other along the rotation axis.

4. The sealing device (100) for a wheel bearing according to Claim 1, wherein the first lip (122) and the second lip (143) comprise a flat surface on a radially inner surface thereof.

5. The sealing device (100) for a wheel bearing according to Claim 1, wherein the second lip (143) comprises a third baffle (144) having an annular shape based on the rotation axis.

6. The sealing device (100) for a wheel bearing according to Claim 1, wherein:
the first sealing part (120) and the second sealing part (140) are formed to define a second cavity passage (164) connected to the second cavity (163) and having an annular shape about the rotation axis and a third cavity (165) connected to the second cavity passage (164) and having an annular shape about the rotation axis in the gap (160),
the first sealing part (120) comprises a fourth baffle (125) and a fifth baffle (126), which are spaced apart from each other along the rotation axis and have an annular shape based on the rotation axis, and
the second sealing part (140) comprises a sixth baffle (145) located between the fourth baffle (125) and the fifth baffle (126) and having an annular shape based on the rotation axis; and
the fourth baffle (125), the fifth baffle (126), and the sixth baffle (145) partially define the third cavity (165).

7. The sealing device (100) for a wheel bearing according to Claim 6, wherein the first cavity passage (162) is located in the radially outward direction than the second cavity passage (164) between both ends of the second cavity passage (164).

8. The sealing device (100) for a wheel bearing according to Claim 6, wherein:
the first sealing part (120) comprises a grease lip (127) coming into contact with an outer circumferential surface of the second frame (130) and having an annular shape based on the rotation axis, and
the grease lip (127) partially defines a fourth cavity (166) connected to the third cavity (165) and having an annular shape based on the rotation axis.

9. The sealing device (100) for a wheel bearing according to Claim 1, wherein:
the second sealing part (140) comprises a base portion (141) coupled to the second frame (130), and
the base portion (141) comprises at least one groove (150) on a radially outer surface thereof.

## Patentansprüche

1. Dichtungsvorrichtung (100) für ein Radlager, umfassend:
einen ersten Einsatzkörper (101), der einen ringförmigen ersten Rahmen (110) und ein erstes Dichtungsteil (120), das mit dem ersten Rahmen (110) gekoppelt ist, umfasst; und
einen zweiten Einsatzkörper (102), der einen ringförmigen zweiten Rahmen (130) umfasst, der einen Durchmesser aufweist, der kleiner ist als der des ersten Rahmens (110), und ein zweites Dichtungsteil (140), das mit dem zweiten Rahmen (130) gekoppelt, wobei:
der zweite Einsatzkörper (102) ausgelegt ist, um im Verhältnis zu dem ersten Einsatzkörper (101) um eine Drehachse gedreht zu werden,
der erste Einsatzkörper (101) und der zweite Einsatzkörper (102) so angeordnet sind, dass ein Spalt (160) zwischen dem ersten Dichtungsteil (120) und dem zweiten Dichtungsteil (140) gebildet ist,
**dadurch gekennzeichnet, dass**
das erste Dichtungsteil (120) und das zweite Dichtungsteil (140) gebildet sind, um einen ersten Hohlraum (161) zu definieren, der basierend auf der Drehachse eine Ringform aufweist, einen ersten Hohlraumdurchgang (162), der mit dem ersten Hohlraum (161) verbunden ist und basierend auf der Drehachse eine Ringform aufweist, und einen zweiten Hohlraum (163), der mit dem ersten Hohlraumdurchgang (162) verbunden ist und basierend auf der Drehachse in dem Spalt (160) eine Ringform aufweist,
das erste Dichtungsteil (120) eine erste Lippe (122) umfasst, die zu dem zweiten Dichtungsteil (140) hin vorsteht und basierend auf der Drehachse eine Ringform aufweist und ausgelegt ist, um teilweise den ersten Hohlraum (161) zu definieren,
das zweite Dichtungsteil (140) eine zweite Lippe (143) umfasst, die zu dem ersten Dichtungsteil (120) hin vorsteht und basierend auf der Drehachse eine Ringform aufweist und ausgelegt ist, um teilweise den zweiten Hohlraum (163) zu definieren,
die erste Lippe (122) mindestens eine Rille (150) an einer radialen Außenoberfläche davon umfasst, die zu der ersten Hohlraum (161) zeigt,
die zweite Lippe (143) mindestens eine Rille (150) an einer radialen Außenoberfläche davon umfasst, die zu dem zweiten Hohlraum (163) zeigt,
das zweite Dichtungsteil (120) eine erste Leitwand (142) umfasst, die basierend auf der Drehachse eine Ringform aufweist,
die erste Lippe (122) eine zweite Leitwand (123) umfasst, die von der ersten Leitwand (142) in die radiale Richtung nach innen beabstandet ist und basierend auf der Drehachse eine Ringform aufweist; und
die erste Leitwand (142) und die zweite Leitwand (123) teilweise den ersten Hohlraumdurchgang (162) definieren,
eine Breite (W) der Rille (150) 0,1 mm überschreitet.

2. Dichtungsvorrichtung (100) für ein Radlager nach Anspruch 1, wobei die erste Lippe (122) und die zweite Lippe (143) an einer radialen Innenoberfläche davon eine plane Oberfläche umfassen.

3. Dichtungsvorrichtung (100) für ein Radlager nach Anspruch 1, wobei die erste Lippe (122) und die zweite Lippe (143) eine Vielzahl von Rillen (150) umfassen, und angrenzende Rillen (150) unter der Vielzahl von Rillen (150) entlang der Drehachse voneinander beabstandet sind.

4. Dichtungsvorrichtung (100) für ein Radlager nach Anspruch 1, wobei die erste Lippe (122) und die zweite Lippe (143) an einer radialen Innenoberfläche davon eine plane Oberfläche umfassen.

5. Dichtungsvorrichtung (100) für ein Radlager nach Anspruch 1, wobei die zweite Lippe (143) eine dritte Leitwand (144) umfasst, die basierend auf der Drehachse eine Ringform aufweist.

6. Dichtungsvorrichtung (100) für ein Radlager nach Anspruch 1, wobei:
das erste Dichtungsteil (120) und das zweite Dichtungsteil (140) gebildet sind, um einen zweiten Hohlraumdurchgang (164) zu definieren, der mit dem zweiten Hohlraum (163) verbunden ist und eine Ringform über die Drehachse aufweist, und einen dritten Hohlraum (165), der mit dem zweiten Hohlraumdurchgang (164) verbunden ist und eine Ringform über die Drehachse in dem Spalt (160) aufweist,
das erste Dichtungsteil (120) eine vierte Leitwand (125) und eine fünfte Leitwand (126) umfasst, die entlang der Drehachse voneinander beabstandet sind und basierend auf der Drehachse eine Ringform aufweisen, und
das zweite Dichtungsteil (140) eine sechste Leitwand (145) umfasst, die zwischen der vierten Leitwand (125) und der fünften Leitwand (126) gelegen ist und basierend auf der Drehachse eine Ringform aufweist; und
die vierte Leitwand (125), die fünfte Leitwand (126) und die sechste Leitwand (145) teilweise den dritten Hohlraum (165) definieren.

7. Dichtungsvorrichtung (100) für ein Radlager nach Anspruch 6, wobei der erste Hohlraumdurchgang (162) zwischen beiden Enden des zweiten Hohlraumdurchgangs (164) in der radialen Richtung weiter nach außen gelegen ist als der zweite Hohlraumdurchgang (164).

8. Dichtungsvorrichtung (100) für ein Radlager nach Anspruch 6, wobei:
das erste Dichtungsteil (120) eine Fettlippe (127) umfasst, die mit einer äußeren Umfangsoberfläche des zweiten Rahmens (130) in Berührung kommt und basierend auf der Drehachse eine Ringform aufweist, und
die Fettlippe (127) teilweise einen vierten Hohlraum (166) definiert, der mit dem dritten Hohlraum (165) verbunden ist und basierend auf der Drehachse eine Ringform aufweist.

9. Dichtungsvorrichtung (100) für ein Radlager nach Anspruch 1, wobei:
das zweite Dichtungsteil (140) einen Basisabschnitt (141) umfasst, der mit dem zweiten Rahmen (130) gekoppelt ist, und
der Basisabschnitt (141) mindestens eine Rille (150) an einer radialen Außenoberfläche davon umfasst.

## Revendications

1. Dispositif d'étanchéité (100) pour un roulement de roue, comprenant :
un premier corps d'insert (101) comprenant un premier cadre (110) annulaire et une première partie d'étanchéité (120) accouplée au premier cadre (110) ; et
un second corps d'insert (102) comprenant un second cadre (130) annulaire présentant un diamètre qui est plus petit que celui du premier cadre (110) et une seconde partie d'étanchéité (140) accouplée au second cadre (130), dans lequel :
le second corps d'insert (102) est configuré pour tourner par rapport au premier corps d'insert (101) autour d'un axe de rotation,
le premier corps d'insert (101) et le second corps d'insert (102) sont agencés de telle sorte qu'un interstice (160) est formé entre la première partie d'étanchéité (120) et la seconde partie d'étanchéité (140),
**caractérisé en ce que**
la première partie d'étanchéité (120) et la seconde partie d'étanchéité (140) sont formées pour définir une première cavité (161) présentant une forme annulaire basée sur l'axe de rotation, un passage de première cavité (162) relié à la première cavité (161) et présentant une forme annulaire basée sur l'axe de rotation, et une deuxième cavité (163) reliée au passage de première cavité (162) et présentant une forme annulaire basée sur l'axe de rotation dans l'interstice (160),
la première partie d'étanchéité (120) comprend une première lèvre (122) faisant saillie vers la seconde partie d'étanchéité (140), présentant une forme annulaire basée sur l'axe de rotation et configurée pour définir partiellement la première cavité (161),
la seconde partie d'étanchéité (140) comprend une seconde lèvre (143) faisant saillie vers la première partie d'étanchéité (120), présentant une forme annulaire basée sur l'axe de rotation et configurée pour définir partiellement la deuxième cavité (163),
la première lèvre (122) comprend au moins une rainure (150) sur une surface radialement extérieure de celle-ci faisant face à la première cavité (161),
la seconde lèvre (143) comprend au moins une rainure (150) sur une surface radialement extérieure de celle-ci faisant face à la deuxième cavité (163),
la seconde partie d'étanchéité (120) comprend un premier déflecteur (142) présentant une forme annulaire basée sur l'axe de rotation,
la première lèvre (122) comprend un deuxième déflecteur (123) espacé du premier déflecteur (142) dans la direction radialement vers l'intérieur et présentant une forme annulaire basée sur l'axe de rotation ; et
le premier déflecteur (142) et le deuxième déflecteur (123) définissent partiellement le passage de première cavité (162),
une largeur (W) de la rainure (150) dépasse 0,1 mm.

2. Dispositif d'étanchéité (100) pour un roulement de roue selon la revendication 1, dans lequel la première lèvre (122) et la seconde lèvre (143) comprennent une surface plate sur une surface radialement intérieure de celles-ci.

3. Dispositif d'étanchéité (100) pour un roulement de roue selon la revendication 1, dans lequel la première lèvre (122) et la seconde lèvre (143) comprennent une pluralité de rainures (150), et des rainures (150) adjacentes parmi une pluralité de rainures (150) sont espacées les unes des autres le long de l'axe de rotation.

4. Dispositif d'étanchéité (100) pour un roulement de roue selon la revendication 1, dans lequel la première lèvre (122) et la seconde lèvre (143) comprennent une surface plate sur une surface radialement intérieure de celles-ci.

5. Dispositif d'étanchéité (100) pour un roulement de roue selon la revendication 1, dans lequel la seconde lèvre (143) comprend un troisième déflecteur (144) présentant une forme annulaire basée sur l'axe de rotation.

6. Dispositif d'étanchéité (100) pour un roulement de roue selon la revendication 1, dans lequel :
la première partie d'étanchéité (120) et la seconde partie d'étanchéité (140) sont formées pour définir un deuxième passage de cavité (164) relié à la deuxième cavité (163) et présentant une forme annulaire autour de l'axe de rotation et une troisième cavité (165) reliée au deuxième passage de cavité (164) et présentant une forme annulaire autour de l'axe de rotation dans l'interstice (160),
la première partie d'étanchéité (120) comprend un quatrième déflecteur (125) et un cinquième déflecteur (126), qui sont espacés l'un de l'autre le long de l'axe de rotation et présentent une forme annulaire basée sur l'axe de rotation, et
la seconde partie d'étanchéité (140) comprend un sixième déflecteur (145) situé entre le quatrième déflecteur (125) et le cinquième déflecteur (126) et présentant une forme annulaire basée sur l'axe de rotation ; et
le quatrième déflecteur (125), le cinquième déflecteur (126), et le sixième déflecteur (145) définissent partiellement la troisième cavité (165).

7. Dispositif d'étanchéité (100) pour un roulement de roue selon la revendication 6, dans lequel le passage de première cavité (162) est situé dans la direction radialement plus vers l'extérieur que le deuxième passage de cavité (164) entre les deux extrémités du deuxième passage de cavité (164).

8. Dispositif d'étanchéité (100) pour un roulement de roue selon la revendication 6, dans lequel :
la première partie d'étanchéité (120) comprend une lèvre de graissage (127) entrant en contact avec une surface circonférentielle extérieure du second cadre (130) et présentant une forme annulaire basée sur l'axe de rotation, et
la lèvre de graissage (127) définit partiellement une quatrième cavité (166) reliée à la troisième cavité (165) et présentant une forme annulaire basée sur l'axe de rotation.

9. Dispositif d'étanchéité (100) pour un roulement de roue selon la revendication 1, dans lequel :
la seconde partie d'étanchéité (140) comprend une portion de base (141) accouplée au second cadre (130), et
la portion de base (141) comprend au moins une rainure (150) sur une surface radialement extérieure de celle-ci.
